# EUROPEAN PATENT APPLICATION

(11) **EP 3 623 631 A1**
(43) Date of publication of application: **18.03.2020**
(21) Application number: 19197658.8
(22) Date of filing: 17.09.2019
(51) Int. Cl.: F04C 29/00

(54) **SCROLL TYPE COMPRESSOR**

(30) Priority: 17.09.2018 KR 20180110884
(71) Applicant: LG ELECTRONICS INC., Yeongdeungpo-Gu Seoul 07336 (KR)
(72) Inventor: YOO, Byungkil, 08592 Seoul (KR); PARK, Kyoungjun, 08592 Seoul (KR); LEE, Byeongchul, 08592 Seoul (KR); CHOI, Yongkyu, 08592 Seoul (KR)
(74) Representative: Vossius & Partner Patentanwälte Rechtsanwälte mbB

(57) **Abstract**

A scroll type compressor includes a motor including a rotor; a rotatable shaft coupled to the rotor; a frame disposed adjacent to the motor to support the rotatable shaft; a fixed scroll coupled to the frame; an orbiting scroll eccentrically coupled to the rotatable shaft, wherein the orbiting scroll is engaged with the fixed scroll to orbit relative to the fixed scroll; and a balance weight including: a coupled portion having an inner opening defined therein receiving the rotatable shaft, wherein the coupled portion is coupled to and between the rotor and the frame; and a weight portion extending from an outer periphery of the coupled portion.

## Description

### BACKGROUND

### 1. Field

The present disclosure relates to a compressor and, in particular, to a scroll type compressor including a balance weight.

### 2. Description of Related Art

A scroll type compressor is one type of compressors that has a fixed scroll fixed in an inner space of a closed casing and an orbiting scroll rotatably engaged with the fixed scroll to compress fluid such as refrigerant.

Such a scroll type compressor may obtain a relatively high compression ratio compared to other types of compressors. In addition, suction, compression and discharge processes of the fluid are smoothly connected to each other to obtain a stable torque. Thus, the scroll type compressor is widely used for refrigerant compression in an air conditioner.

The scroll type compressor may be equipped with a balance weight to compensate for an unbalance caused by a centrifugal force of an eccentric orbiting scroll.

Normally, the balance weight is press-inserted into a rotatable shaft or is coupled to a rotor of a motor via a rivet.

The balance weight is usually produced to a large thickness using forging or casting.

Thus, in order for the thick balance weight to be press-inserted into the rotatable shaft, it is necessary to maintain a thickness of a press-inserted part thereof. To this end, a thick steel plate is used for the press-inserted part, or the press-inserted part is folded one time to secure a thickness thereof. Further, precision machining may be added to adapt a dimension of the press-inserted part.

Thus, there is a need for a method that can efficiently manufacture and assemble the balance weight while reducing such additional processes.

### SUMMARY

The present disclosure aims to solve the above problem. One purpose of the present disclosure is to provide a scroll type compressor in which a balance weight may be fabricated and assembled in a small number of processes.

Further, another purpose of the present disclosure is to provide a scroll type compressor in which a balance weight may be fabricated and assembled using a relatively thin plate.

Further, another purpose of the present disclosure is to provide a scroll type compressor in which a balance weight is not press-fitted into the compressor but is coupled thereto in a sliding manner.

Further, another purpose of the present disclosure is to provide a scroll type compressor in which an additional machining or precision machining to secure a press-fitted face.

Purposes of the present disclosure are not limited to the above-mentioned purpose. Other purposes and advantages of the present disclosure as not mentioned above may be understood from following descriptions and more clearly understood from embodiments of the present disclosure. Further, it will be readily appreciated that the purposes and advantages of the present disclosure may be realized by features and combinations thereof as disclosed in the claims.

In order to achieve the technical purposes, an embodiment of the present disclosure proposes a scheme in which a plate type balance weight is fixed to the compressor via a motor rotor that is pressed into a motor rotatable shaft. Therefore, this does not take into account the thickness of a press-fitted part of the plate type balance weight and thus a precision machining of the press-fitted part is not required.

That is, one embodiment of the present disclosure proposes a scheme in which a balance weight shape is formed using a sheet metal plate, and the motor rotor is pressed into the motor rotatable shaft while the balance weight is fitted into the motor rotatable shaft together with the motor rotor.

One embodiment of the present disclosure may propose a balance weight including a coupled portion having an opening defined therein receiving the motor rotatable shaft and coupled to between the motor rotor and the compressor frame, and a weight portion extending along an outer periphery of the coupled portion.

One embodiment of the present disclosure may propose a balance weight that is coupled to between the motor rotor and a stopping shoulder formed on the rotatable shaft to offset a centrifugal force generated by rotation of the orbiting scroll.

In an aspect, the present disclosure provides a scroll type compressor comprising: a casing having a closed inner space defined therein; a motor installed in the inner space of the casing to generate a rotating force, wherein the motor includes a stator and a rotor; a rotatable shaft coupled to the rotor of the motor; a frame disposed adjacent to the motor to support the rotatable shaft; a fixed scroll coupled to the frame to define a compressing chamber therebetween; an orbiting scroll eccentrically coupled to the rotatable shaft, wherein the orbiting scroll is located in the compressing chamber, and is engaged with the fixed scroll to orbit relative to the fixed scroll; and a balance weight coupled to and between the motor rotor and a stopping shoulder formed on the rotatable shaft, wherein the balance weight is configured to counterbalance a centrifugal force generated by rotation of the orbiting scroll.

In one implementation of the aspect, a balance weight including: a coupled portion having an inner opening defined therein receiving the rotatable shaft, wherein the coupled portion is coupled to and between the rotor and the frame; and a weight portion extending from an outer periphery of the coupled portion.

In one implementation of the aspect, the balance weight is coupled to and between the rotor and a stopping shoulder formed on the rotatable shaft.

In one implementation of the aspect, the weight portion has a uniform thickness.

In one implementation of the aspect, the weight portion is bent at least once.

In one implementation of the aspect, the weight portion is bent into a corresponding shape to an outer shape of the frame.

In one implementation of the aspect, the coupled portion is coupled to the rotatable shaft while sliding along a clearance.

In one implementation of the aspect, the coupled portion is fixed coupled to the rotatable shaft while the rotor is press-fitted with the rotatable shaft.

In one implementation of the aspect, the balance weight includes an anti-rotation mechanism to prevent independent rotation of the balance weight.

In one implementation of the aspect, the anti-rotation mechanism includes: a groove formed in the rotor; and a protrusion formed on the coupled portion and inserted into the groove.

In one implementation of the aspect, the anti-rotation mechanism includes: a pin installed on the motor rotor; and a pin hole defined in the coupled portion and receiving the pin.

In one implementation of the aspect, the anti-rotation mechanism includes: a rivet for fixing plates of the motor to each other; and a rivet hole receiving a head of the rivet.

In one implementation of the aspect, the coupled portion has an extended coupled portion extending therefrom, wherein the extended coupled portion has a width corresponding to a spacing between the stopping shoulder and the motor rotor.

In one implementation of the aspect, a distance between the balance weight and the motor rotor is greater than a thickness of the coupled portion having a plate shape.

In one implementation of the aspect, the balance weight is formed by bending a member of a plate shape.

### BRIEF DESCRIPTION OF DRAWINGS

FIG. 1 is a cross-sectional view of a scroll compressor according to a first embodiment of the present disclosure.
FIG. 2 is a perspective view showing a balance weight according to a first embodiment of the present disclosure.
FIG. 3 is a cross-sectional view of a scroll compressor according to a second embodiment of the present disclosure.
FIG. 4 is a perspective view showing a balance weight according to a second embodiment of the present disclosure.
FIG. 5 is a schematic diagram showing a process of installing a balance weight according to a second embodiment of the present disclosure.
FIG. 6 is a schematic diagram showing a state in which a balance weight has been installed according to a second embodiment of the present disclosure.
FIG. 7 is a schematic diagram showing a process of installing a balance weight according to a third embodiment of the present disclosure.
FIG. 8 is a perspective view showing a balance weight according to a third embodiment of the present disclosure.
FIG. 9 is a schematic diagram showing a process of installing a balance weight according to a fourth embodiment of the present disclosure.
FIG. 10 is a perspective view showing a balance weight according to a fourth embodiment of the present disclosure.
FIG. 11 is a plan view showing a structure of a coupled portion and a pin hole of the balance weight according to the fourth embodiment of the present disclosure.
FIG. 12 is a schematic diagram showing a process of installing a balance weight according to a fifth embodiment of the present disclosure.
FIG. 13 is a schematic diagram showing a process of installing a balance weight according to a sixth embodiment of the present disclosure.

### DETAILED DESCRIPTIONS

For simplicity and clarity of illustration, elements in the figures are not necessarily drawn to scale. The same reference numbers in different figures denote the same or similar elements, and as such perform similar functionality. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

Examples of various embodiments are illustrated and described further below. It will be understood that the description herein is not intended to limit the claims to the specific embodiments described. On the contrary, it is intended to cover alternatives, modifications, and equivalents as may be included within the spirit and scope of the present disclosure as defined by the appended claims.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of" when preceding a list of elements may modify the entire list of elements and may not modify the individual elements of the list.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

In addition, it will also be understood that when a first element or layer is referred to as being present "on" or "beneath" a second element or layer, the first element may be disposed directly on or beneath the second element or may be disposed indirectly on or beneath the second element with a third element or layer being disposed between the first and second elements or layers. It will be understood that when an element or layer is referred to as being "connected to", or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

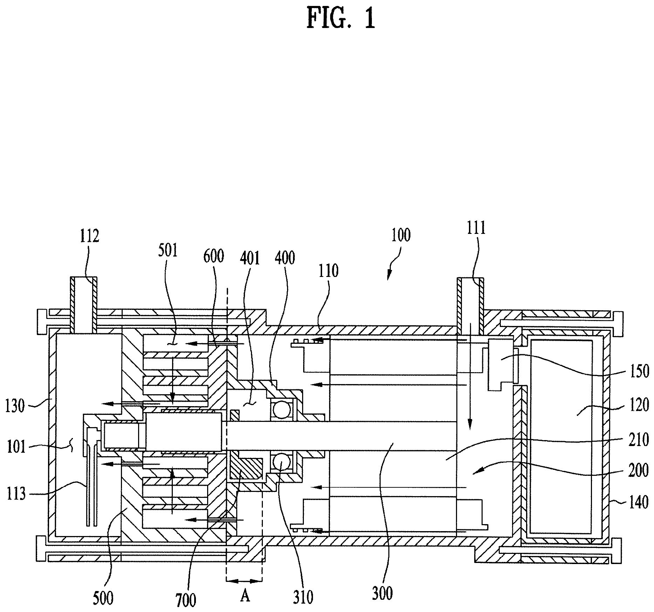

FIG. 1 is a cross-sectional view of a scroll compressor according to a first embodiment of the present disclosure. FIG. 1 shows a horizontal scroll compressor.

This horizontal scroll compressor may include a casing 100 having an enclosed interior space defined therein. Components for compressing fluid may be installed in the casing 100. That is, the components in the casing 100 may include a motor 200, a rotatable shaft 300, a fixed scroll 500 and an orbiting scroll 600 engaged with each other, and a frame 400 on which the rotatable shaft 300 is installed.

The casing 100 having the closed space may be embodied in a form of a horizontal cylinder. The casing 100 may have an intake port 111 and a discharge port 112 for input and output of refrigerant thereto and therefrom.

The inner space of the casing 100 may receive the motor 200 that generates rotational force. Further, the rotatable shaft 300 may be installed which is coupled with a rotor 210 of the motor 200.

This rotatable shaft 300 may be eccentrically coupled to the orbiting scroll 600. That is, the motor 200 may provide a rotational force via the rotatable shaft 30 to the orbiting scroll 600 to rotate.

The frame 400 may be installed adjacent to the motor 200. The frame 400 may be formed as a main frame and may be made of a high hardness material such as cast iron.

This frame 400 may provide a support structure on which the fixed scroll 500 and orbiting scroll 600 may be installed. That is, the fixed scroll 500 may be coupled to the frame 400 to define a compressing chamber 501.

In this connection, the casing 100 may have a discharging chamber 101 defined therein through which refrigerant gas is discharged from the compressing chamber 501. The discharge port 112 may communicate with the discharging chamber 101 so that the refrigerant in the discharging chamber 101 may be discharged through the discharge port 112.

In this discharging chamber 101, oil may be separated from the refrigerant. In this connection, the oil collected into a lower space may be suctioned by an oil pick-up 113 and then be supplied to each of rotating parts.

A separate inverter chamber 140 may be defined adjacent to the intake port 111 in the casing 100. An inverter 120 may be located in the inverter chamber 140. In one example, a power connector 150 may be disposed inwardly of the inverter chamber 140 and may connect to the motor 200.

Further, a sealing structure 310 for sealing the compressing chamber while rotatably fixing the rotatable shaft 300 may be disposed on the frame 400. In one example, bearings (not shown) may be installed on an inner end of the casing 100 to help the rotatable shaft 300 to rotate smoothly.

The orbiting scroll 600 may be installed between the fixed scroll 500 and the frame 400 such that the orbiting scroll 600 is engaged with the fixed scroll 500 to perform an orbiting motion with respect to the fixed scroll 500.

This orbiting scroll 600 is connected to the rotatable shaft 300. The scroll 600 may be eccentrically coupled to the rotatable shaft 300 to perform the orbiting movement.

In this connection, a circular elastic plate (not shown) may be interposed between the fixed scroll 500 and frame 400.

As described above, in the scroll type compressor 100, the compressing chamber 501 may be defined between the orbiting scroll 600 and the fixed scroll 500, such that a back-pressure chamber 401 may be defined between the orbiting scroll 600 and the frame 400.

Within this back-pressure chamber 401, a balance weight 700 may be disposed for counterbalancing a centrifugal force generated by the rotation of the orbiting scroll 600. This balance weight 700 may be installed on the rotatable shaft 300 and may be installed at a position in an opposite direction to the eccentric direction of the rotatable shaft 300.

That is, the balance weight 700 may be press-fitted with the rotatable shaft 300 inside the frame 400. Thus, because the balance weight 700 is press-fitted with the rotatable shaft 300, a relatively thick steel sheet may be used for the weight to ensure a thickness of the press-fitted face. Further, since the balance weight 700 is installed inside the back-pressure chamber 401, this thick steel plate may be bent once again.

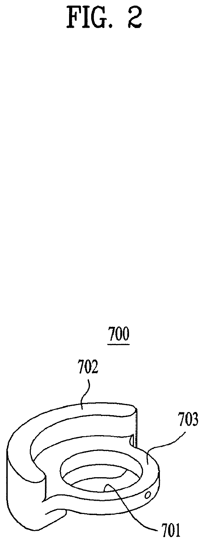

FIG. 2 is a perspective view showing a balance weight according to a first embodiment of the present disclosure.

As described above, the balance weight 700 according to the first embodiment may be formed using a relatively thick iron plate to secure the thickness of the press-fitted face.

That is, the balance weight 700 may include an annular portion 703 having an opening 701 defined therein and having a predetermined thickness for being press-fitted with the rotatable shaft 300, and a weight portion 702 extending from the annular portion 703 to a predetermined dimension.

Further, the weight portion 702 may be formed by bending the thick iron sheet once. This bending may be configured to ensure the thick portion such that the balance weight 700 is press-fitted with the rotatable shaft and thus combined therewith. Further, this bending may be configured because a shape of the balance weight 700 may be limited by the back-pressure chamber 401 since the weight is installed inside the back-pressure chamber 401.

Referring back to FIG. 1, the weight portion 702 may have a structure bent in this manner and have a constant width A. Therefore, this may ensure a sufficient mass to counterbalance the centrifugal force generated by the rotation of the orbiting scroll 600.

However, in order to secure the width A of the balance weight 700 having such a structure, the frame 400 may be formed to receive a portion of the width A. Thus, a total width of the casing 100 may increase by the width A.

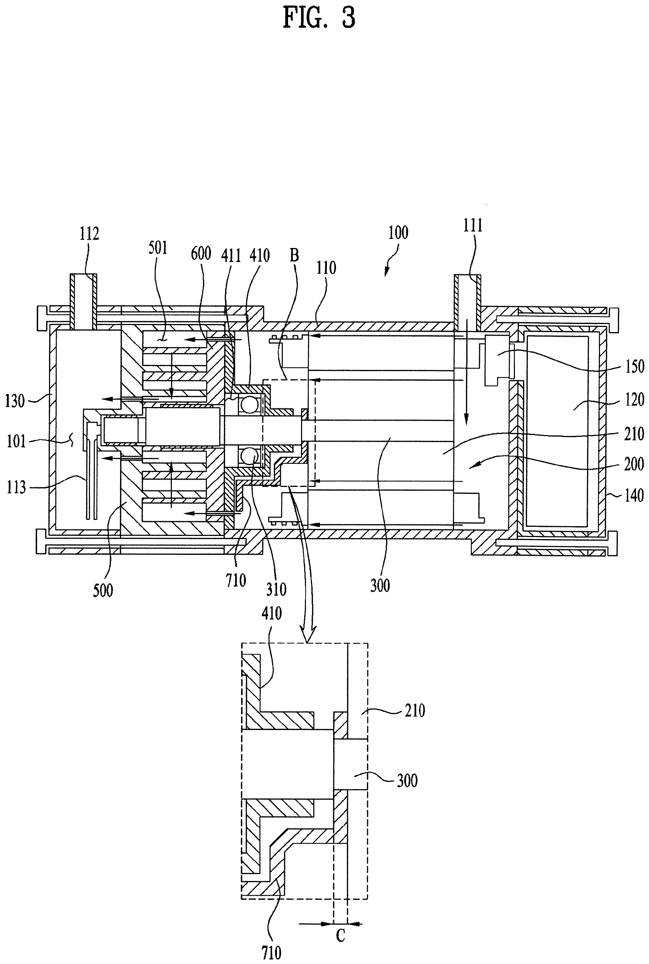

FIG. 3 is a cross-sectional view of a scroll compressor according to a second embodiment of the present disclosure.

Referring to FIG. 3, the scroll compressor according to the second embodiment includes a casing 100 having an enclosed interior space defined therein. Components for compressing fluid may be installed in the casing 100. That is, the components in the casing 100 may include a motor 200, a rotatable shaft 300, a fixed scroll 500 and an orbiting scroll 600 engaged with each other, and a frame 400 on which the rotatable shaft 300 is installed. Further, the components in the casing 100 may further include a balance weight 710 coupled to the rotatable shaft 300 and disposed between the motor 200 and the frame 410.

When describing the structure of the scroll compressor according to the second embodiment, substantially the same parts as those in the first embodiment will be described with reference to the same reference numerals.

As in the first embodiment, the casing 100 having the closed space may be embodied in a form of a horizontal cylinder. The casing 100 may have an intake port 111 and a discharge port 112 for input and output of refrigerant thereto and therefrom.

The inner space of the casing 100 may receive the motor 200 that generates rotational force. Further, the rotatable shaft 300 may be installed which is coupled with a rotor 210 of the motor 200.

This rotatable shaft 300 may be eccentrically coupled to the orbiting scroll 600. That is, the motor 200 may provide a rotational force via the rotatable shaft 30 to the orbiting scroll 600 to rotate.

The frame 400 may be installed adjacent to the motor 200. The frame 400 may be formed as a main frame and may be made of a high hardness material such as cast iron.

This frame 400 may provide a support structure on which the fixed scroll 500 and orbiting scroll 600 may be installed. That is, the fixed scroll 500 may be coupled to the frame 400 to define a compressing chamber 501.

In this connection, the casing 100 may have a discharging chamber 101 defined therein through which refrigerant gas is discharged from the compressing chamber 501. The discharge port 112 may communicate with the discharging chamber 101 so that the refrigerant in the discharging chamber 101 may be discharged through the discharge port 112.

In this discharging chamber 101, oil may be separated from the refrigerant. In this connection, the oil collected into a lower space may be suctioned by an oil pick-up 113 and then be supplied to each of rotating parts.

A separate inverter chamber 140 may be defined adjacent to the intake port 111 in the casing 100. An inverter 120 may be located in the inverter chamber 140. In one example, a power connector 150 may be disposed inwardly of the inverter chamber 140 and may connect to the motor 200.

Further, a sealing structure 310 for sealing the compressing chamber while rotatably fixing the rotatable shaft 300 may be disposed on the frame 400. In one example, bearings (not shown) may be installed on an inner end of the casing 100 to help the rotatable shaft 300 to rotate smoothly.

The orbiting scroll 600 may be installed between the fixed scroll 500 and the frame 400 such that the orbiting scroll 600 is engaged with the fixed scroll 500 to perform an orbiting motion with respect to the fixed scroll 500.

This orbiting scroll 600 is connected to the rotatable shaft 300. The scroll 600 may be eccentrically coupled to the rotatable shaft 300 to perform the orbiting movement.

In this connection, a circular elastic plate (not shown) may be interposed between the fixed scroll 500 and frame 400.

As described above, in the scroll type compressor 100, the compressing chamber 501 may be defined between the orbiting scroll 600 and the fixed scroll 500, such that a back-pressure chamber 401 may be defined between the orbiting scroll 600 and the frame 400.

As mentioned above, the balance weight 710 may be installed on the rotatable shaft 300 and between the motor 200 and the frame 410.

Specifically, referring to an enlarged view of a region B in FIG. 3, the balance weight 710 may be installed between one portion of the frame 410 and the rotor 210 of the motor 200.

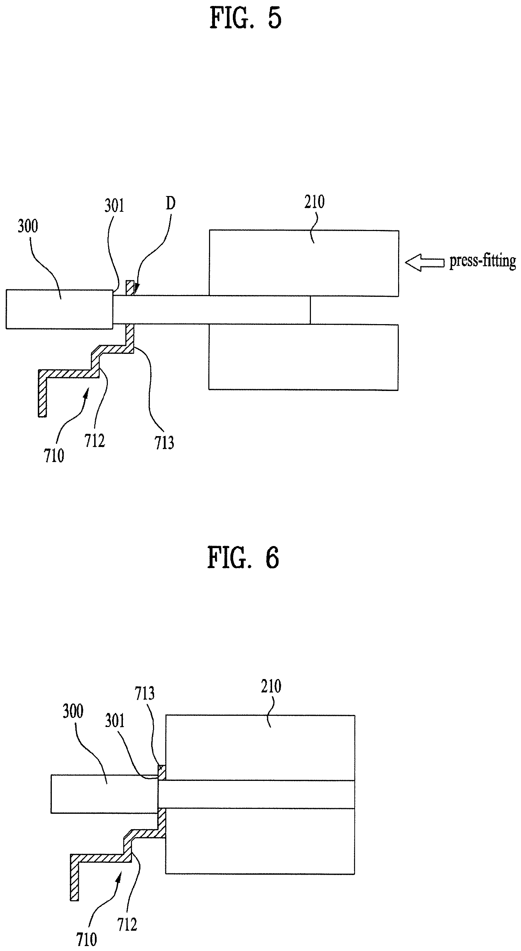

The balance weight 710 may be installed between a stopping shoulder 301 formed on the rotatable shaft 300 (see FIG. 5) and the rotor 210 of the motor 200. Further, since the rotor 210 of the motor 200 is press-fitted with the rotatable shaft 300 and fixed thereto, the balance weight 710 may not have a large thickness for the press-fitting with the shaft 300, which may be different from the configuration of the first embodiment.

That is, the balance weight 710 may be formed using a metal sheet with a relatively smaller thickness in a form of a sheet metal having a small thickness C. As such, the balance weight 710 is assembled with the rotatable shaft 300 while sliding along a clearance. The rotor 210 of the motor 200 may be press-fitted with the rotatable shaft 300 and fixed to the rotatable shaft 300.

This balance weight 710 may be installed on the rotatable shaft 300, and may be installed at a position in an opposite direction to the eccentric direction of the rotatable shaft 300. The balance weight 710 may counterbalance the centrifugal force generated by the rotation of the orbiting scroll 600.

As such, the balance weight 710 according to the second embodiment, unlike the balance weight 700 of the first embodiment may be assembled with the rotatable shaft 300 while sliding along a clearance. Thus, the weight may have a relatively smaller thickness C rather than having a relatively thick structure to ensure the thickness of the press-fitted face as in the first embodiment.

This balance weight 710 will be described later in detail.

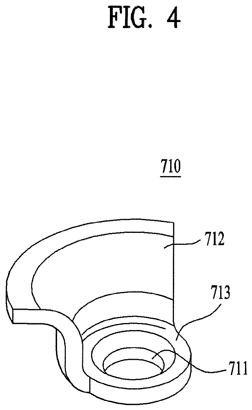

FIG. 4 is a perspective view showing the balance weight according to the second embodiment of the present disclosure.

Referring to FIG. 4, the balance weight 710 according to the second embodiment may include a coupled portion 713 having an inner opening 711 defined therein receiving the rotatable shaft 300 and coupled to between the motor rotor 210 and the frame 410, and a weight portion 712 extending from an outer periphery of the coupled portion 713.

This balance weight 710 may not be press-fitted with the rotatable shaft 300 and rather may be coupled to the rotatable shaft 300 while sliding along a clearance. Thus, the balance weight 710 may not have a large thickness for being press-fitted with the shaft. Further, the balance weight 710 may not be installed in the back-pressure chamber 411 inside the frame 410 and rather may be installed outside the back-pressure chamber 411.

Thus, the balance weight 710 may not be limited to a specific shape as long as the weight has a weight that may offset the centrifugal force generated by the rotation of the orbiting scroll 600.

In this connection, the balance weight 710 may be formed by curving or bending a metal sheet having a small thickness C in an adapted manner to an installation space in the compressor space.

Referring back to FIG. 3, for example, the balance weight 710 may be bent to have a shape corresponding to an outer face shape of the frame 410.

That is, the frame 410 has a bent structure toward the motor to define the back-pressure chamber 411 and receive the sealing structure 310. Thus, the balance weight 710 may be bent in a shape corresponding to the bent structure of the frame 410.

Accordingly, the weight portion 712 of the balance weight 710 may have a uniform thickness C.

Further, the weight portion 712 of the balance weight 710 may include a bent face having at least one step. In this connection, as described above, this bent face may be formed corresponding to the outer face shape of the frame 410.

FIG. 5 is a schematic diagram showing a process of installing the balance weight according to the second embodiment of the present disclosure. Further, FIG. 6 is a schematic diagram showing a state in which the balance weight has been installed according to the second embodiment of the present disclosure.

Referring to FIG. 5, a stopping shoulder 301 may be formed on the rotatable shaft 300. In other words, the rotatable shaft 300 has a portion in which a diameter of the rotatable shaft 300 rapidly increases at an opposite position to the motor rotor 210.

In this connection, the balance weight 710 may be coupled to the rotatable shaft 300 while sliding along a clearance D. In this connection, the sliding clearance D relates to a size of the opening 711 of the balance weight 710. When the balance weight 710 is coupled to the rotatable shaft 300 while the opening 711 receives the shaft, the clearance D may refer to a spacing between the weight and the shaft 300 such that no large external force is required for sliding of the weight 710. Further, the clearance may refer to a spacing between the weight and the shaft 300 such that separate fastening means is required to allow the weight to firmly fixed to the rotatable shaft 300 after sliding.

As such, the balance weight 710 may be slidably coupled to the rotatable shaft 300 while the weight slides from an opposite side to the stopping shoulder 301 thereto.

The rotor 210 of the motor 200 may then be coupled to the rotatable shaft 300 in the same direction in which the balance weight 710 slides. That is, the rotor 210 of the motor 200 may be press-fitted with the rotatable shaft 300 from an opposite side to the stopping shoulder 301 thereto.

Thus, the rotor 210 may be press-fitted with the rotatable shaft 300 until the rotor 210 of the motor 200 is in contact with and is fixed to the balance weight 710, precisely, until, as shown in FIG. 6, the rotor 210 of the motor 200 is in contact with and exerts a force acting on the balance weight 710.

In this connection, the coupled portion 713 of the balance weight 710 may be firmly fixed to between the stopping shoulder 301 of the rotatable shaft 300 and the rotor 210 of the motor 200. That is, the balance weight 710 may rotate at the same rotational speed as the rotation speed of the shaft 300 together with the rotatable shaft 300.

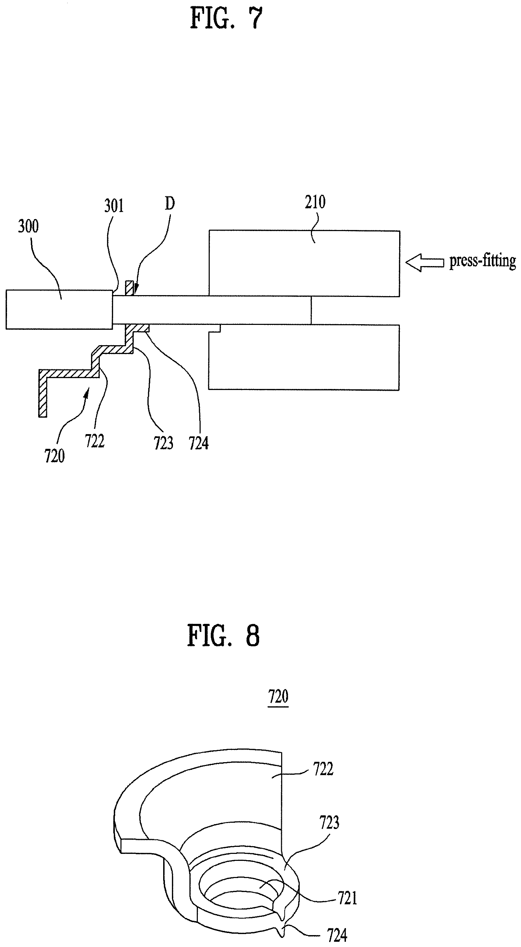

FIG. 7 is a schematic diagram showing a process of installing a balance weight according to a third embodiment of the present disclosure. Further, FIG. 8 is a perspective view showing a balance weight according to a third embodiment of the present disclosure.

Referring to FIG. 7, the balance weight 720 may be coupled to the rotatable shaft 300 while sliding along a clearance D.

In this connection, the balance weight 720 may be slidably coupled to the rotatable shaft 300 while the weight slides from an opposite side to the stopping shoulder 301 thereto.

The rotor 210 of the motor 200 may then be coupled to the rotatable shaft 300 in the same direction in which the balance weight 720 slides. That is, the rotor 210 of the motor 200 may be press-fitted with the rotatable shaft 300 from an opposite side to the stopping shoulder 301 thereto.

Thus, the rotor 210 may be press-fitted with the rotatable shaft 300 until the rotor 210 of the motor 200 is in contact with and is fixed to the balance weight 720.

In this way, the coupled portion 723 of the balance weight 720 may be firmly fixed to and between the stopping shoulder 301 of the rotatable shaft 300 and the rotor 210 of the motor 200.

In this connection, the balance weight 720 may include an anti-rotation mechanism 724 and 302 to prevent the balance weight 720 from rotating independently of the rotatable shaft 300 and rotor 210. That is, the anti-rotation mechanism 724 and 302 may be configured to disallow the balance weight 720 to rotate independently of the rotatable shaft 300 and rotor 210 and to allow the balance weight 720 to rotate integrally with the rotor 210 of the rotatable shaft 300 and the motor 200.

In the present embodiment, the anti-rotation mechanism may include a groove 302 formed in the rotor 210 of the motor 200 and a protrusion 724 protruding from the coupled portion 723 of the balance weight 720 and inserted into the groove 302.

Referring to FIG. 8, a shape of the protrusion 724 formed on the balance weight 720 is shown.

The balance weight 720 may include a coupled portion 723 having an inner opening 721 defined therein receiving the rotatable shaft 300 and coupled to and between the motor rotor 210 and the frame 410, and a weight portion 722 extending from an outer periphery of the coupled portion 723.

Descriptions of remaining components may be the same at those of at least one of the first to third embodiments as described above.

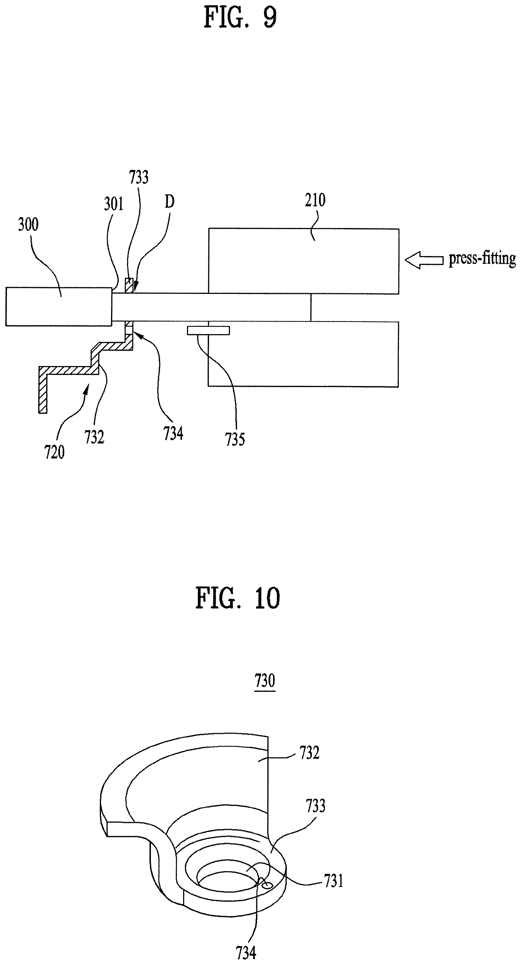

FIG. 9 is a schematic diagram showing a process of installing a balance weight according to a fourth embodiment of the present disclosure. Further, FIG. 10 is a perspective view showing a balance weight according to a fourth embodiment of the present disclosure.

Referring to FIG. 9, the balance weight 730 may be coupled to the rotatable shaft 300 while sliding along a clearance D.

In this connection, the balance weight 730 may be slidably coupled to the rotatable shaft 300 while the weight slides from an opposite side to the stopping shoulder 301 thereto.

The rotor 210 of the motor 200 may then be coupled to the rotatable shaft 300 in the same direction in which the balance weight 730 slides. That is, the rotor 210 of the motor 200 may be press-fitted with the rotatable shaft 300 from an opposite side to the stopping shoulder 301 thereto.

Thus, the rotor 210 may be press-fitted with the rotatable shaft 300 until the rotor 210 of the motor 200 is in contact with and is fixed to the balance weight 730.

In this way, the coupled portion 733 of the balance weight 720 may be firmly fixed to and between the stopping shoulder 301 of the rotatable shaft 300 and the rotor 210 of the motor 200.

In this connection, the balance weight 730 may include an anti-rotation mechanism 734 and 735 to prevent the balance weight 730 from rotating independently of the rotatable shaft 300 and rotor 210. That is, the anti-rotation mechanism 734 and 735 may be configured to disallow the balance weight 730 to rotate independently of the rotatable shaft 300 and rotor 210 and to allow the balance weight 730 to rotate integrally with the rotor 210 of the rotatable shaft 300 and the motor 200.

In the present embodiment, the anti-rotation mechanism may include a pin 735 installed on the motor rotor 210 and a pin hole 734 defined in the coupled portion 733 and receiving the pin 735.

Referring to FIG. 10, a shape of the pin hole 734 formed in the balance weight 730 is shown.

Further, the balance weight 730 may include a coupled portion 733 having an inner opening 731 defined therein receiving the rotatable shaft 300 and coupled to and between the motor rotor 210 and the frame 410, and a weight portion 732 extending from an outer periphery of the coupled portion 733.

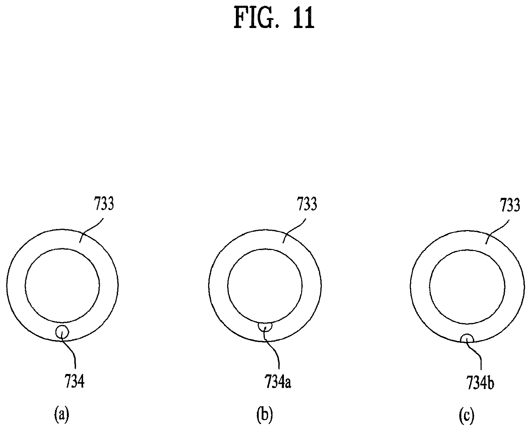

FIG. 11 is a plan view showing a shape of the coupled hole and pin hole of the balance weight according to a fourth embodiment of the present disclosure.

As shown in (a) in FIG. 11, an entirety of the pin hole 734 formed in the coupled portion 733 may be located inside the circumference of the coupled portion 733. Alternatively, as shown in (b) and (c) in FIG. 11, at least a portion of the pin hole 734 formed in the coupled portion 733 may be located outside the circumference of the coupled portion 733.

Accordingly, a position of the pin 735 inserted to the pin hole 734 may be adjusted.

Descriptions of remaining components may be the same at those of at least one of the first to fourth embodiments as described above.

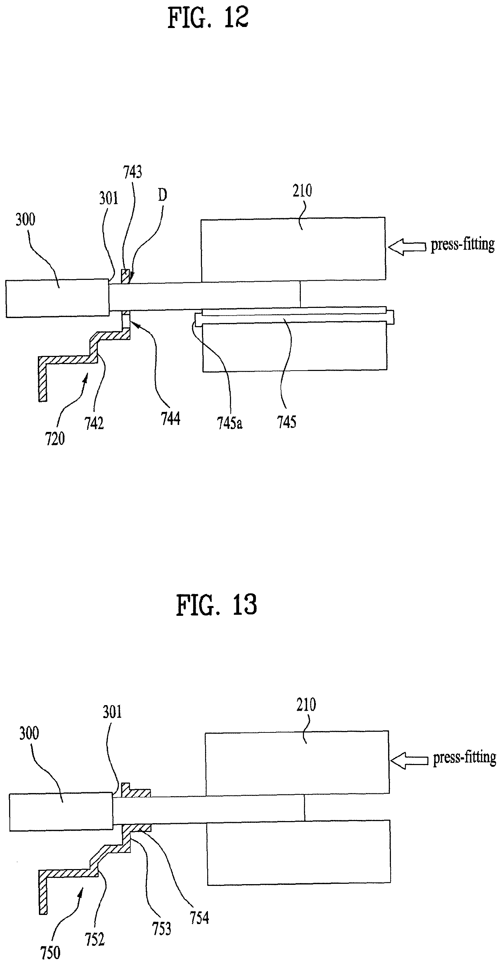

FIG. 12 is a schematic diagram showing a process of installing a balance weight according to a fifth embodiment of the present disclosure.

Referring to FIG. 12, the balance weight 740 may be coupled to the rotatable shaft 300 while sliding along a clearance D.

In this connection, the balance weight 740 may be slidably coupled to the rotatable shaft 300 while the weight slides from an opposite side to the stopping shoulder 301 thereto.

The rotor 210 of the motor 200 may then be coupled to the rotatable shaft 300 in the same direction in which the balance weight 740 slides. That is, the rotor 210 of the motor 200 may be press-fitted with the rotatable shaft 300 from an opposite side to the stopping shoulder 301 thereto.

Thus, the rotor 210 may be press-fitted with the rotatable shaft 300 until the rotor 210 of the motor 200 is in contact with and is fixed to the balance weight 740.

In this way, the coupled portion 743 of the balance weight 740 may be firmly fixed to and between the stopping shoulder 301 of the rotatable shaft 300 and the rotor 210 of the motor 200.

In this connection, the balance weight 740 may include an anti-rotation mechanism 744 and 745a to prevent the balance weight 740 from rotating independently of the rotatable shaft 300 and rotor 210. That is, the anti-rotation mechanism 744 and 745a may be configured to disallow the balance weight 740 to rotate independently of the rotatable shaft 300 and rotor 210 and to allow the balance weight 740 to rotate integrally with the rotor 210 of the rotatable shaft 300 and the motor 200.

In this embodiment, the anti-rotation mechanism may include a rivet head 745a for fixing iron plates of the motor rotor 210 to each other, and a rivet hole 744 receiving the head 745a.

The motor rotor 210 may be composed of a plurality of iron plates around which an iron core is wound. A rivet 745 may fix the multiple iron plates to each other.

The anti-rotation mechanism may employ this rivet 745. That is, the rivet hole 744 receiving the head 745a of the rivet 745 may be formed in the coupled portion 743 of the balance weight 740 to prevent the balance weight 740 from rotating independently of the rotatable shaft 300 and the rotor 210.

Descriptions of remaining components may be the same at those of at least one of the first to fourth embodiments as described above.

FIG. 13 is a schematic diagram showing a process of installing a balance weight according to a sixth embodiment of the present disclosure.

Referring to FIG. 13, the balance weight 750 may be coupled to the rotatable shaft 300 while sliding along a clearance D.

In this connection, the balance weight 750 may be slidably coupled to the rotatable shaft 300 while the weight slides from an opposite side to the stopping shoulder 301 thereto.

The rotor 210 of the motor 200 may then be coupled to the rotatable shaft 300 in the same direction in which the balance weight 750 slides. That is, the rotor 210 of the motor 200 may be press-fitted with the rotatable shaft 300 from an opposite side to the stopping shoulder 301 thereto.

Thus, the rotor 210 may be press-fitted with the rotatable shaft 300 until the rotor 210 of the motor 200 is in contact with and is fixed to the balance weight 750.

In this way, the coupled portion 753 of the balance weight 750 may be firmly fixed to and between the stopping shoulder 301 of the rotatable shaft 300 and the rotor 210 of the motor 200.

In this connection, the weight 750 may include an extended coupled portion 754 extending from the coupled portion 753 of the balance weight 750. The extended coupled portion 754 has a width corresponding to a spacing between the stopping shoulder 301 and the motor rotor 210.

A spacing between the balance weight 750 and the motor rotor 210 may be relatively large depending on an overall construction of the compressor. That is, the distance between the balance weight 750 and the motor rotor 210 may be larger than a thickness of the coupled portion 753 which has a plate shape.

In this case, the balance weight 750 may include the extended coupled portion 754 extending from coupled portion 753. That is, the width of the extended coupled portion 754 may correspond to the spacing between the balance weight 750 and the motor rotor 210 in the compressor.

Descriptions of remaining components may be the same at those of at least one of the first to fifth embodiments as described above.

Details as described in one embodiment may be equally applied to other embodiments unless they are mutually exclusive to each other.

In the scroll type compressor as described above, the balance weight may be fixedly assembled while press-fitting the motor rotor with the rotatable shaft, thus manufacturing and assembling the balance weight in a relatively small number of processes.

Further, there is no need for the large thickness to secure the press-fitted face for being press-fitted with the rotatable shaft, so that the balance weight may be manufactured and assembled using a relatively thin plate material.

Further, the balance weight itself may be slidably coupled to the shaft instead of press-fitting the weight to the shaft, so that no additional process or precision machining for securing the press-fitted face is necessary.

The embodiments of the present disclosure as disclosed in the present specification and drawings are merely presented by way of example for clarity of understanding and is not intended to limit the scope of the present disclosure thereto. It is apparent to those skilled in the art that other modifications based on the technical spirit of the present disclosure may be implemented in addition to the embodiments disclosed herein.

## Claims

1. A scroll type compressor comprising:
a casing (100) having a closed inner space defined therein;
a motor (200) installed in the inner space of the casing to generate a rotating force, wherein the motor includes a stator and a rotor;
a rotatable shaft (300) coupled to the rotor of the motor;
a frame (400) disposed adjacent to the motor to support the rotatable shaft;
a fixed scroll (500) coupled to the frame to define a compressing chamber (501) therebetween;
an orbiting scroll (600) eccentrically coupled to the rotatable shaft (300), wherein the orbiting scroll is located in the compressing chamber (501), and is engaged with the fixed scroll (500) to orbit relative to the fixed scroll; and
a balance weight (700, 710, 720, 730, 740, 750) coupled to the rotatable shaft (300), between the motor rotor (210) and a stopping shoulder (301) formed on the rotatable shaft (300), wherein the balance weight is configured to counterbalance a centrifugal force generated by rotation of the orbiting scroll (600).

2. The scroll type compressor of claim 1, wherein the balance weight (710, 720, 730, 740, 750) includes:
a coupled portion (713, 723, 733, 743, 753) having an inner opening (711, 721, 731) defined therein, receiving the rotatable shaft (300), wherein the coupled portion is coupled to the rotatable shaft (300), being disposed between the rotor (201) and the frame (400); and
a weight portion (712, 722, 732) extending from an outer periphery of the coupled portion (713, 723, 733, 743, 753).

3. The scroll type compressor of claim 2, wherein the weight portion (712, 722, 732) has a uniform thickness.

4. The scroll type compressor of claim 2 or 3, wherein the weight portion (712, 722, 732) is bent at least once.

5. The scroll type compressor of claim 4, wherein the weight portion (712, 722, 732) is bent to conform to an outer shape of the frame (400).

6. The scroll type compressor of any one of claims 2 to 5, wherein the coupled portion (713, 723, 733, 743, 753) is coupled to the rotatable shaft (300) with a predetermined clearance that allows the coupled portion, during its coupling, to slide along the rotatable shaft.

7. The scroll type compressor of claim 6, wherein the coupled portion (713, 723, 733, 743, 753) is fixedly coupled to the rotatable shaft (300) by the rotor (201) that is press-fitted to the rotatable shaft.

8. The scroll type compressor of any one of the preceding claims, wherein the balance weight (720, 730, 740) includes an anti-rotation mechanism (724, 302, 734, 735, 744, 745a) for preventing independent rotation of the balance weight.

9. The scroll type compressor of claim 8, wherein the anti-rotation mechanism (724, 302) includes:
a groove (302) on the rotor; and
a protrusion (724) on the coupled portion (723), being inserted into the groove (302).

10. The scroll type compressor of claim 8, wherein the anti-rotation mechanism (734, 735) includes:
a pin (735) installed on the motor rotor (201); and
a pin hole (734) formed on the coupled portion (733), receiving the pin (735).

11. The scroll type compressor of claim 8, wherein the anti-rotation mechanism (744, 745a) includes:
a rivet (745) fixing plates of the motor rotor (210) to each other; and
a rivet hole (744) formed on the coupled portion (743), receiving a head (745a) of the rivet (745).

12. The scroll type compressor of any one of the preceding claims, insofar as dependent upon claim 2, wherein the balance weight (710, 720, 730, 740, 750) has an extended coupled portion (754) extending from the coupled portion (713, 723, 733, 743, 753), wherein the coupled portion (713, 723, 733, 743, 753) with the extended coupled portion (754) extends along the rotatable shaft (300) with a length corresponding to a spacing between the stopping shoulder (301) and the motor rotor (201).

13. The scroll type compressor of any one of claims 2 to 11, insofar as dependent upon claim 2, wherein the coupled portion (713, 723, 733, 743, 753) has a plate shape, and a distance between the balance weight (710, 720, 730, 740, 750) and the motor rotor (201) is greater than a thickness of the coupled portion (713, 723, 733, 743, 753).

14. The scroll type compressor of any one of the preceding claims, wherein the balance weight (700, 710, 720, 730, 740, 750) is a plate shape member with at least one bend.
